# EUROPEAN PATENT SPECIFICATION

(11) **EP 2 142 718 B1**
(45) Date of publication and mention of the grant of the patent: **18.04.2018**
(21) Application number: 08732648.4
(22) Date of filing: 21.03.2008
(51) Int. Cl.: E04B 1/78

(54) **TENSIONED ARCHITECTURAL MEMBRANE STRUCTURE, ENVELOPE COMPRISING SUCH A STRUCTURE AND METHOD FOR PRODUCING THE SAME**
ARCHITEKTURSPANNMEMBRANSTRUKTUR, HÜLLE MIT EINER DERARTIGEN STRUKTUR UND HERSTELLUNGSVERFAHREN DAFÜR
STRUCTURES DE MEMBRANES ARCHITECTURALES TENSIONNÉES, ENVELOPPE AVEC UNE TELLE STRUCTURE ET PROCÉDÉ POUR LEUR PRODUCTION

(30) Priority: 23.03.2007 US 896664 P; 24.03.2007 US 896904 P; 26.03.2007 US 908057 P
(43) Date of publication of application: 13.01.2010
(73) Proprietor: Birdair, Inc., Amherst, NY 14221 (US); Geiger Gossen Hamilton Campbell Engineers Pc, Suffern, NY 10901 (US); Cabot Corporation, Boston, MA 02210 (US)
(72) Inventor: AUGUSTYNIAK, Martin, J., Elma, NY 14059 (US); HAMILTON, Kris, P., Bellingham, WA 98225 (US); KALKSTEIN, Hobart, C., Carlisle, MA 01741 (US)
(74) Representative: Grünecker Patent- und Rechtsanwälte PartG mbB
(86) International application number: PCT/US2008/057810
(87) International publication number: WO 2008/118776

(56) References cited:
- EP-A- 0 368 529
- WO-A-2006/135882
- WO-A1-2004/048719
- WO-A2-2006/091812
- US-A- 5 394 786
- US-A1- 2002 069 904
- US-A1- 2006 021 643
- US-A1- 2007 004 306
- ANONYMOUS: 'Aerogel - Wikipedia, the free encyclopedia', [Online] 06 October 2016, XP055308127 Retrieved from the Internet: <URL:https://en.wikipedia.org/wiki/Aerogel> [retrieved on 2016-10-06]
- ANONYMOUS: 'EMG Client Press Centre - Cabot Nanogel (r) promises unmatched energy savings', [Online] 01 October 2004, XP055308111 Retrieved from the Internet: <URL:http://www.emg-pr.com/en/prfitem.aspx? id=3822> [retrieved on 2016-10-06]

## Description

### BACKGROUND OF THE INVENTION

Architectural membranes, also known as tensile or tensioned structures, are increasingly used in building airports, storage facilities, arenas, activity centers, sports or gathering venues, domes, museums, housing and so forth. Architectural membranes provide great design flexibility in roofing, canopies, overhangs and other envelope structures. They can be custom fabricated to various shapes. Pre-assembled modules also are available.

Examples of existing designs that incorporate architectural membranes include the Talisman Center in Calgary, Canada, the Millennium Dome in the United Kingdom, the Denver International Airport, air-supported roofs such as the one used at the Indianapolis RCA dome, and many others.

Architectural membranes can be characterized with respect to their lighting, energy, durability or acoustic properties and for fire performance using known techniques, codes and industry standards, such as, for instance, those developed by the American Society for Testing and Materials (ASTM). Light transmission and spectral reflectance, for example, can be determined using ASTM E424; acoustical properties using ASTM E-90; and fire performance using ASTM E-108 or ASTM E-84.

Existing architectural membranes include those known under the name Sheerfill® provided by Saint-Gobain Corporation. Generally Sheerfill® architectural membranes are based on woven Teflon®-coated fiberglass fabrics. In actual installation, Sheerfill® architectural membranes often are used in conjunction with one or more additional liners designed, for instance, to minimize acoustical disturbances. Characteristics of several types of Sheerfill® architectural membranes are described, for example, in Birdair's Technical Specification & Fabric Characteristics, available from www.birdair.com..

Generally, envelopes based on architectural membranes are lighter than permanent structures, can be more easily erected and dismantled, and tend to withstand destructive forces such as earthquakes.

Designing with architectural membranes often takes into account some of the same criteria, e.g., basic loading, wind pressures and others considered when designing conventional buildings. Such criteria are defined by local building codes or model codes having jurisdiction. In addition, the design process can also include principles relating to the tensile geometry of the membrane, shape generation, biaxial behavior, stress and structural analyses, and so forth.

With an increased demand for energy conservation and "green" construction materials and practices, a need continues to exist for light architectural membranes that maintain the flexibility in design and applications for which they are normally used and yet deliver improved light transmission and good thermal insulation. A need also exists for systems having improved acoustic and high reflectance, e.g., UV reflectance, properties.

US-A-2006 0021643 discloses a tent supported by intersecting poles. The tent can be provided with insulated walls that have three layers of material: an outer or first layer made from a weatherproof/breathable material; a middle or second layer made of 3M Thinsulate, aerogel or another type of thin insulation; and an inner or third layer made from a breathable nylon ripstop.

### SUMMARY OF THE INVENTION

The invention relates to a tensioned architectural membrane structure (10) comprising an aerogel, wherein the aerogel is hydrophobic and is present in an aerogel composite, in a monolith, blanket, mat, sheet or particulate form, wherein the architectural membrane structure (10) carries tension stress only, without compression or bending, and wherein the architectural membrane structure (10) has a first layer (12), a second layer (14) and one or more insert layer(s) (16) including the aerogel between said first (12) and second (14) layers.

The present invention is also directed to an architectural or structural envelope according to appended claim 14 and to a method for manufacturing the tensioned architectural membrane structure according to appended claim 16.

Further, provided is a system comprising a fastening device and the tensioned architectural membrane structure of the invention.

Preferred embodiments of the present invention are set forth in the dependent claims.

### BRIEF DESCRIPTION OF THE DRAWINGS

In the accompanying drawings, reference characters refer to the same parts throughout the different views. The drawings are not necessarily to scale; emphasis has instead been placed upon illustrating the principles of the invention. Of the drawings:
FIG. 1 is a cross sectional view of an architectural or structural composite of the invention, showing outer layers and insert, or inner layer.
FIG. 2 is a cross sectional view of an arrangement including a fastening system securing an architectural or structural composite of the invention.
FIG. 3 is a cross sectional view of another arrangement including another version of a fastening system securing an architectural or structural composite of the invention.
FIG 4A is a cross sectional side view of a construction including a roof that can employ the composite of the invention.
FIG. 4B is a plan view of the construction shown in FIG. 4A.

### DETAILED DESCRIPTION OF THE PREFERRED EMBODIMENTS

The above and other features of the invention including various details of construction and combinations of parts, and other advantages, will now be more particularly described with reference to the accompanying drawings and pointed out in the claims.

The invention generally relates to fabric structures also referred to herein as "architectural membrane structures", "architectural structures" or simply as "structures" or "composites", the last two terms being used interchangeably.

The structure can be used as a substitute for existing architectural membranes employed in structural fabric applications, such as, for example, tensile membranes, air-supported architectural membranes, cushions or pillows, pleated membranes, tensegrity supported membranes, truss and dome supported flexible claddings, building facades, roofs, and building envelopes. Existing architectural fabrics may be classified as permanent structures or movable structures and the composite disclosed herein can be utilized in combination with or as a substitute for both.

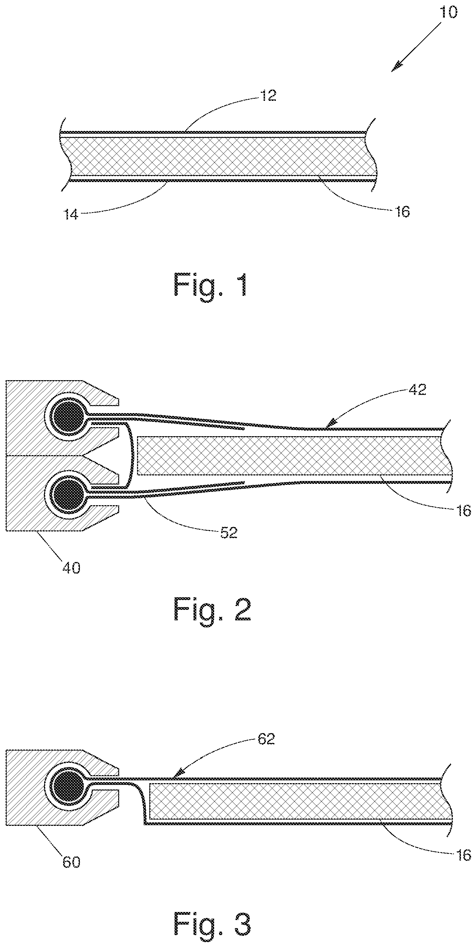

The composite or structure includes a first layer, a second layer, these layers being also referred to herein as "outer layers", and an inner layer, also referred to herein as "insert layer" or "insert" between the first and second layers. Shown in FIG. 1, for example, is three-ply structure 10 which includes outer layers 12 and 14 and insert 16 sandwiched in-between. With respect to actual envelope installations, the outer layers can be referred to as the bottom and top layers, with the top layer facing outwardly from the interior of the architectural structure. One or both outer layers can be provided with one or more liners or coatings. When installed one or both layers can be tensioned.

Additional plies and/or inserts can be employed. For instance, a first insert can be found stacked on a first layer and covered with a second layer which, in turn, supports a second insert, covered with another layer, with optional inserts and further layers disposed above.

In some aspects of the invention, one or more interior layer(s) (not shown in FIG, 1) can be present, e.g., interspersed, within the insert. In other aspects at least one additional outer layer, (also not shown in FIG. 1) is disposed above or below the top or bottom layer, respectively.

These layers can be used to improve properties desired in the overall structure, e.g., to increase overall strength, increase wear resistance, provide desirable acoustic, solar and/or light properties. Interior layers and/or additional outer layers can span the entire surface of the structure or can be provided in specific regions.

The outer layers can be the same or different. Existing fabric or architectural membranes, or layers thereof, can be employed. One or both outer layers can be reinforced fabric membranes. Non-structural outer layers also can be used. One or both outer layer(s) can include a liner or can itself be a composite. Membranes used in air-supported structures also can be utilized as one or both outer layers.

The outer layers are sized and shaped to meet construction and design specifications and can have the same or different thickness. The layer thickness can be, for example, at least about 0.10 millimeters (mm) and up to about 60 mm. Commonly, the layers have a thickness within the range of from about 22 mm to about 40 mm.

In one example, one or both outer layers include woven materials. In another example, one or both outer layers are non-woven.

In preferred aspects of the invention, at least one and preferably both outer layers are translucent. Outer layers having structural, fire, UV, mold, water and/or weather resistance are preferred.

Materials that can be employed to fabricate one or both outer layers include but are not limited to fiberglass, mesh materials, e.g., metal mesh, fibrous batting, aramids, olefins, nylon, acrylics, polyester, natural fibers, e.g., cotton, halopolymers, e.g., polytetrafluoroethylene (PTFE), available, for example, under the tradename of Teflon®, as well as combinations of materials. Foils such as, for example, those made from ethylene tetrafluoroethylene (ETFE), available, e.g., under the designation of Tefzel® from Dupont also can be used.

Whether woven or non-woven, the first and/or second layer(s) can be coated with PTFE, vinyl, e.g., polyvinyl chloride (PVC), silicone, urethanes, acrylics, titanium dioxide (TiO₂) other materials or combinations thereof. The coating can be applied by painting, dipping, spraying, vapor deposition techniques, lamination or other processes known in the art.

In one embodiment, at least one and preferably both outer layers are fabricated from Sheerfill® membrane materials available from Saint-Gobain Corporation. Other commercially available PTFE-coated fiberglass membranes that can be used include Solus® membranes from Taconic International Ltd., Duraskin® from Verseidag Seemee US Inc. or PTFE-coated fiberglass membranes from Chukoh Chemical Industries LTD. Also suitable are expanded woven PTFE (ePTFE) membranes such as those known under the tradeneame of Tenara® from W. L. Gore Assoc. Inc.

Commercially available silicone-coated fiberglass membranes that can be utilized include Archifab® from Fabrimax, Atex® from Interglas and Sky® 300 from Ferrari Textiles. Silicone-coated polyester membranes are those being developed by PD Interglas. Solution-dyed polyester membranes are commercially available as Weatherman FR® by Safety Components Fabric Technologies Inc or Fireset HUV® from Glen Raven Custom Fabrics L.L.C.

Olefin-based membranes include those known under the name of Nova-Shield® by Engineered Coated Products, Twillium® by Inter Wrap and Landmark® by Synthesis Fabrics. Examples of olefin open weave lock-knit mesh include Polytex® from Solarfab Inc. and Coolaroo® from Gale Pacific. Woven polyvinylidene fluoride (PVDF) is commercially available from Duckers & Friends under the designation of Fugalux®.

Commercially available acrylic-coated polyesters that can be employed to form the first and/or second layers include Main Street® from John Boyle, Avenue® from Graniteville Specialty Fabrics and Holiday® from Marchem coated Fabrics Inc.

Photovoltaic membranes such as Power-Film® from PowerFilm Inc. and Power Plastics® from Konarka Technologies can also be used.

One or both outer layers also can be made from other materials that are flexible and preferably strong enough for architectural tensile membrane applications.

Optionally, either or both outer layers is/are coated with an ultraviolet (UV) reflecting film, a dye or scratch-resistant film or another suitable coating.

If additional outer layers and/or interior layers are employed, they can be fabricated from materials such as those disclosed herein or from other suitable materials.

Aerogels are low density porous solids that have a large intraparticle pore volume. Generally, they are produced by removing pore liquid from a wet gel. However, the drying process can be complicated by capillary forces in the gel pores, which can give rise to gel shrinkage or densification. In one manufacturing approach, collapse of the three dimensional structure is essentially eliminated by using supercritical drying. A wet gel also can be dried using an ambient pressure, also referred to as non-supercritical drying process. When applied, for instance, to a silica-based wet gel, surface modification, e.g., end-capping, carried out prior to drying, prevents permanent shrinkage in the dried product. The gel can still shrinks during drying but springs back recovering its former porosity.

Product referred to as "xerogel" also is obtained from wet gels from which the liquid has been removed. The term often designates a dry gel compressed by capillary forces during drying, characterized by permanent changes and collapse of the solid phase network.

For convenience, the term "aerogel" is used herein in a general sense, referring to both "aerogels" and "xerogels".

Aerogels typically have low bulk densities (about 0.15 g/cm³ or less, preferably about 0.03 to 0.3 g/ cm³), very high surface areas (generally from about 300 to about 1,000 square meter per gram (m²/g) and higher, preferably from about 600 to about 1000 m²/g), high porosity (about 90% and greater, preferably greater than about 95%), and a relatively large pore volume (about 3 milliliter per gram (mL/g), preferably about 3.5 mL/g and higher). Aerogels can have a nanoporous structure with pores smaller than 1 micron (µm). Often, aerogels have a mean pore diameter of about 20 nanometers (nm). The combination of these properties in an amorphous structure gives low thermal conductivity values (e.g., 9 to 16 (mW)/m·K at a mean temperature of 37° C and 1 atmosphere of pressure). Aerogels can be nearly transparent or translucent, scattering blue light, or can be opaque.

A common type of aerogel is silica-based. Aerogels based on oxides of metals other than silicon, e.g., aluminum, zirconium, titanium, hafnium, vanadium, yttrium and others, or mixtures thereof can be utilized as well.

Also known are organic aerogels, e.g., resorcinol or melamine combined with formaldehyde, and dendredic polymers, and the invention also could be practiced using these materials.

Suitable aerogel materials and processes for their preparation are described, for example, in U.S. Patent Application No. 2001/0034375 A1 to Schwertfeger et al., published on October 25, 2001.

The aerogel material employed is hydrophobic. As used herein, the terms "hydrophobic" and "hydrophobized" refer to partially as well as to completely hydrophobized aerogel. The hydrophobicity of a partially hydrophobized aerogel can be further increased. In completely hydrophobized aerogels, a maximum degree of coverage is reached and essentially all chemically attainable groups are modified.

Hydrophobicity can be determined by methods known in the art, such as, for example, contact angle measurements or by methanol (MeOH) wettability. A discussion of hydrophobicity in relation to aerogels is found in U.S. Patent No. 6,709,600 B2 issued to Hrubesh et al. on March 23, 2004.

Hydrophobic aerogels can be produced by using hydrophobizing agents, e.g., silylating agents, halogen- and in particular fluorine-containing compounds such as fluorine-containing alkoxysilanes or alkoxysiloxanes, e.g., trifluoropropyltrimethoxysilane (TFPTMOS). Hydrophobizing agents can be used during the formation of aerogels and/or in subsequent processing steps, e.g., surface treatment.

Silylating compounds such as, for instance, silanes, halosilanes, haloalkylsilanes, alkoxysilanes, alkoxyalkylsilanes, alkoxyhalosilanes, disiloxanes, and disilazanes are preferred. Examples of suitable silylating agents include, but are not limited to diethyldichlorosilane, allylmethyldichlorosilane, ethylphenyldichlorosilane, phenylethyldiethoxysilane, trimethylalkoxysilanes, e.g., trimethylbutoxysilane, 3,3,3-trifluoropropylmethyldichlorosilane, symdiphenyltetramethyldisiloxane, trivinyltrimethylcyclotrisiloxane, hexaethyldisiloxane, pentylmethyldichlorosilane, divinyldipropoxysilane, vinyldimethylchlorosilane, vinylmethyldichlorosilane, vinyldimethylmethoxysilane, trimethylchlorosilane, hexamethyldisiloxane, hexenylmethyldichlorosilane, hexenyldimethylchlorosilane, dimethylchlorosilane, dimethyldichorosilane, mercaptopropylmethyldimethoxysilane, bis{3-(triethoxysilyl)propyl}tetrasulfide, hexamethyldisilazane and combinations thereof.

The aerogel can be in granular, pellet, bead, powder, or other particulate form and in any particle size suitable for an intended application. For instance, the particles can be within the range of from about 0.01 microns (µm) to about 10.0 millimeters (mm) and preferably have a mean particle size in the range of 0.3 to 4.0 mm.

Examples of commercially available aerogel materials in particulate form are those supplied under the tradename of Nanogel® by Cabot Corporation, Billerica, Massachusetts. Nanogel® granules have high surface area, are greater than about 90% porous and are available in a particle size ranging, for instance, from about 8 µm to about 10 mm.

Aerogel also can be produced in monolithic shape, for instance as a rigid, semi-rigid, semi-flexible or flexible structure, e.g., mat shaped composites that include fibers. Flexible or semi-flexible monoliths are preferred for use in the insert described herein.

Whether in particulate or monolithic shape, the aerogel can include one or more additives such as fibers, opacifiers, color pigments, dyes and mixtures thereof. For instance, a silica aerogel can be prepared to contain additives such fibers and/or one or more metals or compounds thereof. Specific examples include aluminum, tin, titanium, zirconium or other non-siliceous metals, and oxides thereof. Non-limiting examples of opacifiers include carbon black, titanium dioxide, zirconium silicate, and mixtures thereof. Additives can be provided in any suitable amounts, e.g., depending on desired properties and/or specific application.

Composite materials that include fibers and aerogel (e.g., fiber-reinforced aerogels) and, optionally, at least one binder also can be employed. The fibers can have any suitable structure. For example, the fibers can have no structure (e.g., unassociated fibers). The fibers can have a matrix structure or similar mat-like structure which can be patterned or irregular and random. Preferred composites of materials comprising fibers include composites formed from aerogels and fibers wherein the fibers have the form of a lofty fibrous structure, batting or a form resembling a steel wool pad. Examples of materials suitable for use in the preparation of the lofty fibrous structure include fiberglass, organic polymeric fibers, silica fibers, quartz fibers, organic resin-based fibers, and carbon fibers. The material having a lofty fibrous structure can be used by itself or in combination with a second, open-cell material, e.g., an aerogel material. For instance, a blanket can have a silica aerogel dispersed within a material having a lofty fibrous structure.

Other composite materials suitable in forming the insert layer include at least one aerogel and at least one syntactic foam. The aerogel can be coated to prevent intrusion of the polymer into the pores of the aerogel, as described, for instance in International Publication No. WO 2007047970, with the title Aerogel Based Composites.

In one specific example, the insert is or includes a cracked aerogel monolith such as described in U.S. Patent No. 5,789,075, issued on August 4, 1998 to Frank et al. Preferably, the cracks enclose aerogel fragments that are connected by fibers. Aerogel fragments can have an average volume of 0.001 mm³ to 1 cm³. In one composite, the aerogel fragments have an average volume of 0.1 mm³ to 30 mm³.

In another specific example, the insert is a composite that includes aerogel material, a binder and at least one fiber material as described, for instance, in U.S. Patent No. 6,887,563, issued on May 3, 2005 to Frank et al.

Other specific examples of aerogel-based inserts are fiber-web/aerogel composites that include bicomponent fibers as disclosed in U.S. Patent No. 5,786,059 issued on July 28, 1998 to Frank et al. Such composites use at least one layer of fiber web and aerogel particles, wherein the fiber web comprises at least one bicomponent fiber material, the bicomponent fiber material having lower and higher melting regions and the fibers of the web being bonded not only to the aerogel particles but also to each other by the lower melting regions of the fiber material. In some applications, the bicomponent fibers are manufactured fibers which are composed of two firmly interconnected polymers of different chemical and/or physical constructions and which have regions having different melting points, i.e. lower and higher melting regions.

As described in the above-referenced patent, the bicomponent fibers can have a core-sheath structure. The core of the fiber is a polymer, preferably a thermoplastic polymer, whose melting point is higher than that of the thermoplastic polymer which forms the sheath. The bicomponent fibers are preferably polyester/copolyester bicomponent fibers. It is also possible to use bicomponent fiber variations composed of polyester/polyolefin, e.g. polyester/polyethylene, or polyester/copolyolefin or bicomponent fibers having an elastic sheath polymer. Side-by-side bicomponent fibers also can be employed.

The fiber web may further comprise at least one simple fiber material which becomes bonded to the lower melting regions of the bicomponent fibers in the course of thermal consolidation. The simple fibers are organic polymer fibers, for example polyester, polyolefin and/or polyamide fibers, preferably polyester fibers. The fibers can be round, trilobal, pentalobal, octalobal, ribbony, like a Christmas tree, dumbbell-shaped or otherwise star-shaped in cross section. It is similarly possible to use hollow fibers. The melting point of these simple fibers should be above that of the lower melting regions of the bicomponent fibers.

In further specific examples, the insert layer is in the form of an aerogel sheet or blanket. The sheet or blanket can include, for instance, aerogel particles dispersed in fibers. In other cases, the sheet or blanket includes fibrous batting with continuous aerogel throughout. Sheets or blankets can be produced, for instance, from wet gel structures as described in U.S Patent application Publication Nos. 2005/0046086 A1, published on March 3, 2005 and 2005/0167891 A1, published on August 4, 2005, both to Lee et al.

Combinations of insulating materials such as described above also can be employed. For instance, the insert can include different types of aerogel, e.g., in particulate and/or monolithic form.

Aerogels also can be combined with a non-aerogel material, for example with one or more conventional insulators such as gas, e.g., argon, air, carbon dioxide, vacuum; perlite; fiber glass; silica; aluminoasilicates; or plastics. If translucency is important, aerogel material can be combined with transparent or translucent non-aerogel material, for instance, glass microbeads or microspheres, such as those commercially available from 3M Corporation.

The non-aerogel material can have a particle size suitable for the application. For instance, a suitable particle size of the non-aerogel material can be within the range of from about 0.05 mm and about 4 mm.

Aerogel and non-aerogel materials can be blended in any proportion suitable to the application. Cost requirements, insulating properties, light transmission, function of the composite within the overall construction are some of the factors that can be considered. Generally, the non-aerogel material can be present in the mixture in an amount anywhere from 0% to 99%. For instance, aerogel and non-aerogel materials can be blended in 20:80 to 80:20 ratios, e.g., 60:40, 50:50 or 40:60. Other ratios can be used.

Optionally, the material employed to form the insert layer or insert, e.g., loose aerogel particles or another granular material, can be enclosed in a film or casing made of one or more polymers such as nylon, polycarbonate, metal sheets, or other suitable materials, forming a pillow, mat, or bag. The material also can be present in layers.

The insert layer is sized and shaped to meet construction and design specifications. In illustrative examples, the insert has a thickness of about 0.3 cm (0.125 inches) or greater. Preferably, the insert has a thickness within the range of from about 25 mm to about 200 mm.

In one aspect of the invention, the insert layer has a density less than about 0.5 g/cm³, preferably less than about 0.3 g/cm³ and more preferably less than about 0.1 g/cm³. In another aspect of the invention, the insert has a void volume fraction of at least 10% and preferably at least 50%. In specific examples, the insert has a void volume % of at least 90%.

In preferred implementations, the insert has a light transmission greater than 0% and preferably is translucent. As used herein, the term "translucent" refers to a light transmittance (%T) of at least 0.5% when measured at visible light wavelengths. Preferably, the insert material has a %T of at least 10% for a 0.635 cm (0.25 inch) thickness. As one example, an insert made of Nanogel® material and having a thickness of 25 mm has a visible light transmission of about 53%, while an insert made of Nanogel®, having a thickness of 50 mm, has a visible light transmission of about 26%. In further aspects of the invention, the insulating material eliminates glare, allowing a soft, deep distribution of daylight. Light transmission through a Nanogel® insulator, for example, can be referred to as diffused.

An insert layer that is an insulator is preferred. As used herein, the term "insulating" or "insulator" refers to thermal, acoustic or electric insulating properties. In preferred implementations, the insert combines two or more types of insulating properties.

In one example the insert is a thermal insulator. In many implementations, the insert has an R-value of at least 2, more preferably between 3 and 38. "R value" is a parameter well known in describing construction materials and is a measure of thermal resistance to heat flow.

In another example the insert layer has a substantially constant thermal conductivity (k-value), within the range of from about 12 to about 30 (mW)/m·K at 37° C and 1 atmosphere of pressure. Also preferred are inserts for which the thermal conductivity or k-value of the insert remains constant, or preferably decreases with load or compression.

In a further example, the insert is an acoustic insulator. Nanogel® aerogel particles, for instance, slow down the speed of sound through the structure, reducing noise, in particular in the low to mid frequency range from 40 to 500 Hz.

In yet another example the insert is an electrical insulator.

Hydrophobic inserts are preferred. More preferred are water and mold resistant inserts. Suitable inserts may also have fire resistant or fire-proof properties.

The insert layer can be resilient and/or compressible. In some implementations of the invention, the insert material has elastic compressibility, wherein application of a pressure to a bulk amount of the compressible material results in a reduction of the volume occupied by the compressible material, and wherein after release of the pressure the volume of the compressible material increases and preferably returns to substantially the same value as before application of the pressure. Thus, elastic response to compression or "compressive spring back" results in recovery of insert thickness, preferably of the full insert thickness, when compression is removed.

In one example the insert is compressible and has a compressive spring back force that allows the material to be firmly held in place between the layers. The insert may be able to withstand pressures of 0.07 bar (1 psi), or preferably 0.7 bar (10 psi), or more preferably 7 bar (100 psi), or still more preferably 70 bar (1000 psi), without permanent damage or destruction. The insert may experience volumetric compression to a second volume that is, e.g., 5% to 80% less than its initial volume when put under compressive load. The insert may then spring back to a final volume that is substantially greater than the second volume as the load is decreased. This behavior allows for systems wherein the insert substantially fills the volume between the layers even if that volume is changing due to wind load, creep, mechanical compression or other outside forces.

Incorporating a material such as described above in a structure or composite suitable for architectural membrane applications can be conducted during the manufacture of the composite.

Several approaches can be employed to produce architectural membrane structures. In one example a monolithic structure, e.g., an aerogel blanket, is incorporated into the structure or composite by stacking or layering. For instance, a monolithic insert can be disposed over a bottom layer then covered with a top layer. Material, e.g., lose granules, retained in a sheath or casing can be incorporated in a similar fashion.

To produce the composite, an aerogel in monolithic or granular form, or as part of a composite, also can be provided in a gap space formed between the first and second layers described above. Assemblies that have multiple layers can contain the material in one, more than one, or all of the gap spaces. A particulate aerogel can be added to one gap space, while an aerogel blanket, can be provided to another.

In another example, aerogels is incorporated within the architectural membrane structure by techniques disclosed, for instance in U.S. Patent No. 6,598,283 B2, issued to Rouanet et al. on July 29, 2003. U.S. Patent No. 6,598,283 B2 describes, for instance, a method which includes providing a sealed first container comprising aerogel particles under a first air pressure that is less than atmospheric pressure. The unrestrained volume of the aerogel particles at the first air pressure is less than the unrestrained volume of the aerogel particles under a second air pressure that is greater than the first air pressure. The sealed first container is placed within a second container, e.g., the space between the outer layers and the sealed first container is breached to equalize the air pressure between the first and second containers at the second air pressure and to increase the volume of the aerogel particles, thereby forming the insulation article.

In specific examples, loose granular material is used in conjunction with a binder material between the layers. The layers can either tightly enclose the material or can loosely enclose the material. In loose enclosures, the layers can be held apart by air in a pillow-like form. In this case, the insert material can completely fill the inner pillow region or could partially fill the region, being affixed to one or more of the outer layers by an optional binder.

Other suitable approaches can be employed to incorporate granular materials in air-supported structures, e.g., pillows or cushions. Furthermore, air-supported cushion or pillow structures can be formed utilizing aerogel blankets.

To reduce or minimize settling and the formation of voids, the space or gap volume between the outer layers can be "overfilled" or "overpacked". Overpacked systems can have a density at least as high as the tap density. For aerogel particles, overfilling is to a density higher than the tap density. In systems filled with aerogel particles that are very light compared to a relatively heavy frame, the density can be considerably greater than the tap density, for instance about 105 to about 115% - 120% and higher of tap density.

Optionally, moisture can be removed from the insert material prior to, during or after being added to form the architectural membrane structure.

The manufacture or fabrication process can further include adhering two or more of the first layer, insert layer and second layer (i.e., plies) to one another. Non-adhering techniques also can be employed, resulting in at least two of the plies being non-adhering. Specific approaches for joining together two or more of the plies include stitching the plies together, laminating the plies together, or powder bonding the plies together. The plies may be directly connected, or they may be indirectly connected together by intervening materials.

Suitable techniques that can be used to produce the architectural membrane structure of the invention include but are not limited to lamination, adhesives, sandwiching between two tensioned layers, sewing, riveting, blowing in loose material, and wet processing into a composite form.

The architectural composites of the invention can be finished into panels. To finish the composite edges and/or corners of the composite structure can be sealed or clamped together. Edge conditions for panels utilizing composites of the invention are illustrated in FIG. 2 and FIG. 3. Also shown in FIG. 2 and FIG. 3 are fastening systems or devices that can be employed in combination with the composites of the invention.

Shown in FIG. 2, for instance, is a fastening device that includes edge bars 40 for securing panel 42. Panel 42 includes a composite such as described above, having insert 16 and optionally sealed outer layers 12 and 14. The panel is provided with roped or beaded edges 52. Edge bars 40 grip the layers and can be fastened to supporting or perimeter components.

Another approach for fastening a composite such as described above is illustrated in FIG. 3. Shown in FIG. 3 is fastening device 60 for securing panel 62 comprising a composite having insert 16. In this example, the composite includes non-structural outer layer 64 and single reinforced fabric outer layer 66 and the panel is fastened using roped edge 72 and clip 74.

The fastening systems depicted in FIG. 2 and FIG. 3 can be fabricated in whole or in part from aluminum or another suitable materials. Fastening means other than those depicted in FIG. 2 and FIG. 3 also can be employed.

Architectural membrane structures of the invention can have a substantially constant thickness, the thickness being, for instance, within the range of from about 0.635 cm (0.25 inches) to about 10.16 cm (4 inches), preferably within the range of from about 0.95 cm (0.375 inches) to about 7.62 cm (3 inches).

In preferred implementations, the structure can have a measure of thermal resistance to heat flow, referred to herein as "R" value of at least 2, preferably within the range of from about 3 to 38. A desirable R value for the overall structure or composite is a value that is greater than the R value of the outer layers in the absence of the insert.

Preferably, thermal insulating properties of the architectural membrane structure increase with load or compression. In specific implementation, the structure has a thermal conductivity (k-value) that remains constant or, preferably, decreases with load and/or compression.

In some embodiments, the architectural membrane structure has a light, e.g., visible light, transmittance (% T) greater than 0%, e.g., at least about 0.25 %, preferably at least about 0.5%, e.g., within the range of from about 0.5% and about 2%, more preferably at least 2, e.g., within the range of from about 2% and 10%, and most preferably greater than about 10% and up to 80% or higher. Also preferred are composites that have high light reflectance, e.g., of at least 60%, preferably at least 70% and more preferably 80% or more. Suitable approaches for measuring light transmittance and spectral reflectance are set out in European Standard EN 410 or in ASTM E424.

Solar heat gain coefficients can be, for instance, in the range of from about 0.21 to 0.73.

The architectural structure preferably provides acoustic insulation with particular properties of sound absorption and diffusion, and with enhanced performance in the OITC rating (outdoor indoor transmission class) in the range between 40 and 400 Hz.

In preferred implementations, the architectural membrane structure includes a load bearing insulator, i.e., an insulator that retains or substantially retains one or more of its insulating properties, e.g., its thermal insulating properties, under a mechanical load.

In specific examples, the insert transfers a load between the outer layers under conditions such as wind, where one layer, e.g., membrane, resists pressures from one direction, say into the composite, and the other layer or membrane resists pressure from the same direction, say, away from the composite. These pressures may be of the order of 4.79 to 19.152 mbar (10 to 40 pounds per square foot (psf)). The structure disclosed herein preferably also resists snow loads, where the pressures typically occur on the top layer only; these pressures may range from 9.58 mbar (20 psf) to in excess of 47.88 mbar (100 psf).

In some implementations, one or both outer layer(s) is/are partially and, preferably, entirely supported by the insert.

In other examples of the invention, the architectural membrane structure disclosed herein has fire resistance properties and preferably is fire-proof. Furthermore, the structure can be water, weather and/or mold resistant.

The structure or composite can constitute an architectural element, structural element or can serve as both. As with conventional architectural membranes, the composite of the invention can be used to produce pre-assembled modules.

In some implementations, the architectural membrane structure is an air supported cushion or pillow.

The structure or composite of the invention can be used as a tensioned structure, having a shape that is determined by tension in the composite and the geometry of the support structure. Typically, the structure includes flexible elements (e.g. composite and cables), non-flexible elements (e.g. struts, masts, beams, rings, or arches) and the anchorage (e.g. supports and foundations). Preferably, when installed, the tensioned layer is the bottom layer.

In addition to three dimensional curves, composites of the invention can be pretensioned for instance to a pretension value calculated based on expected loading during the life cycle of the architectural structure or composite. Preferably, the pretension is high enough to have a minimum of tension in both directions under any possible condition. If pretension is too low, the composite can become susceptible to vibrations caused by wind. If pretension is too high, the composite can require heavy and expensive supporting structure and/or foundation.

Shapes that can be used alone or in combination include synclastic, e.g., spheres or domes, anticlastic, e.g. saddle-like. Thus composites of the invention can be erected or prefabricated as domes, conical, waveform, synclassic, anticlassic, and pleated.

Architectural membrane composites according to the inventions can be used in envelope structures such as roofs, overhangs, canopies, tents and tent-like structures, walls, artistic displays, esthetic or other structures which can be integrated in the design and construction of airports, storage facilities, hangars, arenas, activity centers, sports or gathering venues, domes, green houses, residential or commercial buildings, manufacturing facilities, museums, hotels, universities, railroad, bus or subway stations, waiting areas, theaters, opera houses, amphitheaters, passageways between buildings, and connecting joints in industrial facilities.

Envelope structures that include the composites disclosed herein can be used as substitutes or in addition to envelopes that employ existing architectural membranes.

The architectural membrane structure disclosed herein can be used as cladding or can be integrated in domes and other constructions, such those described in U.S. Patent Nos. 4,736,553 issued to Geiger on April 12, 1988; 5,103,600 issued to Geiger and Campbell on April 14, 1992; 5,261,193, issued on November 16, 1993 and 5,430,979, issued on July 11, 1995, both to Wieber et al; U.S. Patent No. 5,502,928 issued to Terry on April 2, 1996; U.S. Patent No. 6,282,842 B1 issued to Simens on September 4, 2001; and many others. It can be a substitute or can be combined with existing materials, e.g., the flexible composites described in U.S. Patent No. 7,153,792 issued on December 26, 2006 to Sahlin et al.

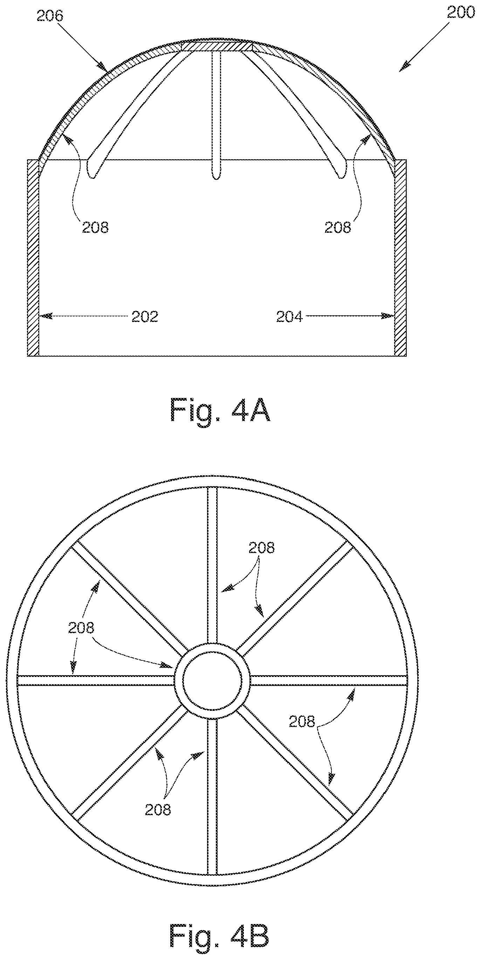

Shown in FIG 4A and 4B, for instance, is building 200, including walls 202 and 204 and roof 206. A composite such as described herein is supported by beams 208. Alternatively or in addition to beams 208, other means for support can be employed, e.g., cabling and/or air pressure.

Engineering approaches for integrating composites disclosed herein into various architectural designs depend on the purpose of the envelope, its function, shape, properties sought and other factors.

Examples are described, for instance, in U.S. Patent No. 5,502,928 issued on April 2, 1996 to Terry and 4,736,553 issued to Geiger on April 12, 1988. Other examples are described in publications such as the following available from www.geigerenginners.com: (i) Design Experience with Nonlinear Tension Based Systems: Tents, Trusses and Tensegrity by D. Campbell, D. Chen, and P. Gossen P.E.; (ii) Membrane Designs and Structures in the World, edited by Kazuo Ishii; (iii) Tensioned Fabric Membrane Roofs for "Tensegrity" Domes by D. Campbell, et.al..

## Claims

1. A tensioned architectural membrane structure (10) comprising: an aerogel,
wherein the aerogel is hydrophobic and is present in an aerogel composite, in a monolith, blanket, mat, sheet or particulate form,
wherein the architectural membrane structure (10) carries tension stress only, without compression or bending, and
wherein the architectural membrane structure (10) has a first layer (12), a second layer (14) and one or more insert layer(s) (16) including the aerogel between said first (12) and second (14) layers.

2. The tensioned architectural membrane structure (10) of claim 1, wherein at least one of said first (12) and second (14) layers includes fiberglass, mesh materials including metal mesh, fibrous batting, aramids, olefins, nylon, acrylics, polyester, natural fibers including cotton, halopolymers including polytetrafluoroethylene, foils including ethylene tetrafluouoethylene foils, or combinations thereof, or wherein at least one of said first (12) and second layers (14) is coated with polytetrafluoroethylene, vinyl, silicone, titanium dioxide or combinations thereof.

3. The tensioned architectural membrane structure (10) of claim 2, wherein the first (12) and second (14) layer are the same or wherein the first (12) and second (14) layer are different.

4. The tensioned architectural membrane structure (10) of claim 3, having at least one edge or corner that is sealed or clamped.

5. The tensioned architectural membrane structure (10) of claim 1, having a thermal insulation R value of at least 2.

6. The tensioned architectural membrane structure (10) of claim 1, having a light transmittance (% T) greater than 0%.

7. The tensioned architectural membrane structure (10) of claim 1, wherein only one of said first and second layers (12, 14) is tensioned.

8. The tensioned architectural membrane structure (10) of claim 1, wherein the aerogel transfers a load between said first and second layers (12, 14).

9. The tensioned architectural membrane structure (10) of claim 1, wherein the aerogel is adhered to a layer (12, 14).

10. The tensioned architectural membrane structure (10) of claim 1, wherein the aerogel is under a compression that is sufficient to accommodate a volume change in a gap space and wherein the volume change is caused by wind, creep, mechanical force or any combination thereof.

11. The tensioned architectural membrane structure (10) of claim 1, wherein the aerogel has an elastic response to compression.

12. The tensioned architectural membrane structure (10) of claim 1, wherein the aerogel is present in a layer (16) having a thermal conductivity value that decreases with load or compression.

13. The tensioned architectural membrane structure (10) of claim 1, wherein the structure (10) has thermal insulating properties, electrical insulating properties, acoustical insulating properties or any combination thereof.

14. An architectural or structural envelope comprising the tensioned architectural membrane structure (10) of claim 1, said envelope further comprising at least one additional element selected from the group consisting of a flexible element, a non-flexible element, and an anchorage element.

15. A system comprising a fastening device (60) and the tensioned architectural membrane structure (10) of claim 1.

16. A method for manufacturing the tensioned architectural membrane structure (10) of claim 1, comprising securing an aerogel material between a first (12) and second (14) layer.

17. The method of claim 16, wherein at least two of the first layer (12), an insert layer (16) containing the aerogel material and the second layer (14) are adhered or laminated to one another.

18. The method of claim 16, wherein the aerogel material is in particulate form.

19. The method of claim 16, wherein the aerogel material is enclosed in a space between said layers (12, 14) by mechanical compression, layer tensioning, vacuum sealing or any combination thereof.

## Patentansprüche

1. Architekturspannmembranstruktur (10), umfassend: ein Aerogel,
wobei das Aerogel hydrophob ist und in einem Aerogelverbundstoff, in Form eines Monoliths, einer Decke, einer Matte, einer Folie oder in partikulärer Form vorhanden ist,
wobei die Architekturmembranstruktur (10) nur Zugspannung, ohne Druck oder Biegen, trägt, und
wobei die Architekturmembranstruktur (10) eine erste Schicht (12), eine zweite Schicht (14) und eine oder mehrere Einlageschicht(en) (16), die das Aerogel enthält bzw. enthalten, zwischen der ersten (12) und zweiten (14) Schicht aufweist.

2. Architekturspannmembranstruktur (10) nach Anspruch 1, wobei wenigstens eine von den ersten (12) und zweiten (14) Schichten Glasfasern, Maschenmaterialien, einschließlich eines Metallgitters, faserartige Watte, Aramide, Olefine, Nylon, Acrylharzderivate, Polyester, natürliche Fasern, einschließlich Baumwolle, Halogenpolymere, einschließlich Polytetrafluorethylen, Folien, einschließlich Ethylentetrafluorethylenfolien, oder Kombinationen davon einschließt, oder wobei wenigstens eine von den ersten (12) und zweiten (14) Schichten mit Polytetrafluorethylen, Vinyl, Silicon, Titandioxid oder Kombinationen davon beschichtet ist.

3. Architekturspannmembranstruktur (10) nach Anspruch 2, wobei die erste (12) und zweite (14) Schicht gleich sind oder wobei die erste (12) und zweite (14) Schicht verschieden sind.

4. Architekturspannmembranstruktur (10) nach Anspruch 3, die wenigstens einen Rand oder eine Ecke aufweist, welche versiegelt oder festgeklemmt ist.

5. Architekturspannmembranstruktur (10) nach Anspruch 1, mit einem R-Wert der Wärmeisolierung von wenigstens 2.

6. Architekturspannmembranstruktur (10) nach Anspruch 1, mit einer Lichtdurchlässigkeit (% T) größer als 0 %.

7. Architekturspannmembranstruktur 10) nach Anspruch 1, wobei nur eine von den ersten und zweiten Schichten (12, 14) gespannt ist.

8. Architekturspannmembranstruktur (10) nach Anspruch 1, wobei das Aerogel eine Last zwischen den ersten und zweiten Schichten (12, 14) überträgt.

9. Architekturspannmembranstruktur (10) nach Anspruch 1, wobei das Aerogel an eine Schicht (12, 14) adhäriert ist.

10. Architekturspannmembranstruktur (10) nach Anspruch 1, wobei das Aerogel unter einem Druck steht, welcher ausreicht, um sich einer Volumenänderung in einem Zwischenraum anzupassen, und wobei die Volumenänderung durch Wind, Kriechen, mechanische Kraft oder eine beliebige Kombination davon verursacht wird.

11. Architekturspannmembranstruktur (10) nach Anspruch 1, wobei das Aerogel eine elastische Reaktion auf Druck aufweist.

12. Architekturspannmembranstruktur (10) nach Anspruch 1, wobei das Aerogel in einer Schicht (16) mit einem Wärmeleitfähigkeitswert vorhanden ist, welcher mit Last oder Druck abnimmt.

13. Architekturspannmembranstruktur (10) nach Anspruch 1, wobei die Struktur (10) Wärmeisoliereigenschaften, elektrische Isoliereigenschaften, akustische Isoliereigenschaften oder eine beliebige Kombination davon aufweist.

14. Architektonische oder strukturelle Hülle, umfassend die Architekturspannmembranstruktur (10) nach Anspruch 1, wobei die Hülle außerdem wenigstens ein zusätzliches Element, ausgewählt aus der Gruppe bestehend aus einem flexiblen Element, einem unflexiblen Element und einem Ankerelement, umfasst.

15. System, umfassend eine Befestigungsvorrichtung (60) und die Architekturspannmembranstruktur (10) nach Anspruch 1.

16. Verfahren zum Herstellen der Architekturspannmembranstruktur (10) nach Anspruch 1, umfassend das Einfügen eines Aerogelmaterials zwischen einer ersten (12) und zweiten (14) Schicht.

17. Verfahren nach Anspruch 16, wobei wenigstens zwei von der ersten Schicht (12), einer Einlageschicht (16), die das Aerogelmaterial enthält, und der zweiten Schicht (14) aneinander adhäriert oder laminiert sind.

18. Verfahren nach Anspruch 16, wobei das Aerogelmaterial in partikulärer Form vorliegt.

19. Verfahren nach Anspruch 16, wobei das Aerogelmaterial in einem Raum zwischen den Schichten (12, 14) durch mechanischen Druck, Schichtenspannung, Vakuumversiegelung oder irgendeine Kombination davon eingeschlossen wird.

## Revendications

1. Structure de membrane architectural tendue (10) comprenant : un aérogel,
dans laquelle l'aérogel est hydrophobe et est présent dans un composite d'aérogel, dans une forme de monolithe, de couverture, de tapis, de feuille ou particulaire,
dans laquelle la structure de membrane architectural (10) ne supporte que des contraintes de tension, sans compression ni flexion, et
dans laquelle la structure de membrane architecturale (10) comporte une première couche (12), une seconde couche (14) et une ou plusieurs couche(s) d'insertion (16) comprenant l'aérogel entre lesdites première (12) et seconde (14) couches.

2. Structure de membrane architecturale tendue (10) selon la revendication 1, dans laquelle au moins l'une desdites première (12) et seconde (14) couches comprend de la fibre de verre, des matériaux de treillis comprenant du treillis métallique, du molleton fibreux, des aramides, des oléfines, du nylon, des acryliques, du polyester, des fibres naturelles y compris du coton, des polymères halogénés, y compris du polytétrafluoroéthylène, des feuilles comprenant des feuilles d'éthylène-tétrafluoroéthylène, ou des combinaisons de ceux-ci, ou dans laquelle au moins l'une desdites première (12) et seconde couches (14) est revêtue de polytétrafluoréthylène, de vinyle, de silicone, de dioxyde de titane ou de combinaisons de ceux-ci.

3. Structure de membrane architecturale tendue (10) selon la revendication 2, dans laquelle la première (12) et la seconde (14) couches sont identiques, ou dans laquelle la première (12) et la seconde (14) couches sont différentes.

4. Structure de membrane architecturale tendue (10) selon la revendication 3, ayant au moins un bord ou coin qui est scellé ou immobilisé.

5. Structure de membrane architectural tendue (10) selon la revendication 1, ayant une valeur d'isolation thermique R d'au moins 2.

6. Structure de membrane architecturale tendue (10) selon la revendication 1, ayant une transmittance de lumière (T en %) supérieure à 0 %.

7. Structure de membrane architecturale tendue (10) selon la revendication 1, dans laquelle seule une desdites première et seconde couches (12, 14) est tendue.

8. Structure de membrane architecturale tendue (10) selon la revendication 1, dans laquelle l'aérogel transfère une charge entre lesdites première et seconde couches (12, 14).

9. Structure de membrane architecturale tendue (10) selon la revendication 1, dans laquelle l'aérogel est mis en adhérence sur une couche (12, 14).

10. Structure de membrane architecturale tendue (10) selon la revendication 1, dans laquelle l'aérogel est sous une compression qui est suffisante pour accepter un changement de volume dans un espace de jeu et dans lequel le changement de volume est provoqué par du vent, un fluage, une force mécanique ou une quelconque combinaison de ceux-ci.

11. Structure de membrane architecturale tendue (10) selon la revendication 1, dans laquelle l'aérogel a une réponse élastique à la compression.

12. Structure de membrane architecturale tendue (10) selon la revendication 1, dans laquelle l'aérogel est présent dans une couche (16) ayant une valeur de conductivité thermique qui diminue avec la charge ou la compression.

13. Structure de membrane architecturale tendue (10) selon la revendication 1, dans laquelle la structure (10) a des propriétés d'isolation thermique, des propriétés d'isolation électrique, des propriétés d'isolation acoustique ou une quelconque combinaison de celles-ci.

14. Enveloppe architectural ou structurelle comprenant la structure de membrane architectural tendue (10) selon la revendication 1, ladite enveloppe comprenant en outre au moins un élément supplémentaire choisi dans le groupe constitué d'un élément flexible, d'un élément non flexible et d'un élément d'ancrage.

15. Système comprenant un dispositif de fixation (60) et la structure de membrane architecturale tendue (10) selon la revendication 1.

16. Procédé de fabrication de la structure de membrane architecturale tendue (10) selon la revendication 1, comprenant la fixation d'un matériau d'aérogel entre des première (12) et seconde (14) couches.

17. Procédé selon la revendication 16, dans lequel au moins deux de la première couche (12), d'une couche d'insertion (16) contenant le matériau d'aérogel et de la seconde couche (14) sont collées ou stratifiées l'une sur l'autre.

18. Procédé selon la revendication 16, dans lequel le matériau d'aérogel est sous forme particulaire.

19. Procédé selon la revendication 16, dans lequel le matériau d'aérogel est enfermé dans un espace entre lesdites couches (12, 14) par compression mécanique, tension de la couche, fermeture hermétique sous vide ou une quelconque combinaison de celles-ci.
